# EUROPEAN PATENT APPLICATION

(11) **EP 4 186 621 A1**
(43) Date of publication of application: **31.05.2023**
(21) Application number: 22208470.9
(22) Date of filing: 21.11.2022
(51) Int. Cl.: B23B 27/14, B23B 27/22

(54) **CUTTING TOOL**

(30) Priority: 30.11.2021 JP 2021193901
(71) Applicant: Tungaloy Corporation, Iwaki-shi Fukushima 970-1144 (JP)
(72) Inventor: SASAKI, Yasutake, Iwaki-shi, Fukushima, 970-1144 (JP)
(74) Representative: Vossius & Partner Patentanwälte Rechtsanwälte mbB

(57) **Abstract**

The present invention provides a cutting tool which has a flat top face but still has excellent chip control. The cutting tool includes: a peripheral side face; a top face which is a flat top face constituting a part of an upper surface that is depressed except for the portion of the top face; a cutting edge that is formed at least on a ridge line of a corner R connecting two linear ridge lines, out of ridge lines where the peripheral side face and top face cross; and a fan-shaped rake portion including ridge portions and groove portions, which are disposed alternately and are both depressed so as to be inclined from the corner R, where the crossing line with the top face appears in a wave form, toward a pivot portion which is a center of radial portions.

## Description

### Background

### Field

The present invention relates to a cutting tool.

### Description of Related Art

A cutting tool that uses an ultra-high pressure sintered body made of diamond or the like for a cutting edge is known (e.g. see WO 2016/035490).

### Summary

In a case of a cutting tool that uses an ultra-high pressure sintered body for a cutting edge, the cutting edge is normally formed by polishing the upper surface thereof, hence it is difficult to create a projection higher than a flat top face (polished face), that is, it is difficult to form a chip breaker having excellent chip control.

With the foregoing in view, it is an object of the present invention to provide a cutting tool which has a flat top face but still has excellent chip control.

A cutting tool according to an aspect of the present invention includes:
a peripheral side face; a top face, which is a flat top face constituting a part of an upper surface that is depressed except for the portion of the top face; a cutting edge that is formed at least on a ridge line at a corner R connecting to two linear ridge lines, out of the ridge lines where the peripheral side face and the top face cross; and a fan-shaped rake portion including ridge portions and groove portions, which are disposed alternately and are both depressed so as to be inclined from the corner R, where the crossing line with the top face appears in a wave form, toward a pivot portion which is a center of radial portions.

By the present invention, a cutting tool which has a flat top face but still has excellent chip control can be provided.

### Brief Description of Drawings

FIG. 1 is a general perspective view of a cutting tool in which a cutting insert according to the present embodiment is installed;
FIG. 2 is a general perspective view of the cutting insert;
FIG. 3 is a partial enlarged view of the cutting insert;
FIG. 4 is a partial enlarged view of a vicinity of a corner R of a cutting edge member observed diagonally;
FIG. 5 is a partial enlarged view of a vicinity of the corner R of the cutting edge member from above;
FIG. 6 is a C-C cross-sectional view of the cutting edge member;
FIG. 7 is a D-D cross-sectional view of the cutting edge member;
FIG. 8 is an enlarged schematic view of the corner R;
FIG. 9 is a partial enlarged view of a cutting insert according to another embodiment; and
FIG. 10 is a partial enlarged view of a vicinity of a corner R of a cutting edge member according to another embodiment observed diagonally.

### Detailed Description

Embodiments of the present invention will be described with reference to the accompanying drawings. In each drawing, composing elements denoted with same reference signs have the same or similar configuration. In each drawing, when a plurality of components having the same or similar configuration exist, a part thereof may be denoted with a reference sign and the reference sign may be omitted for other same or similar components, to prevent the drawing from becoming complicated. Not all composing elements described in the embodiments are required for the invention to solve the problem.

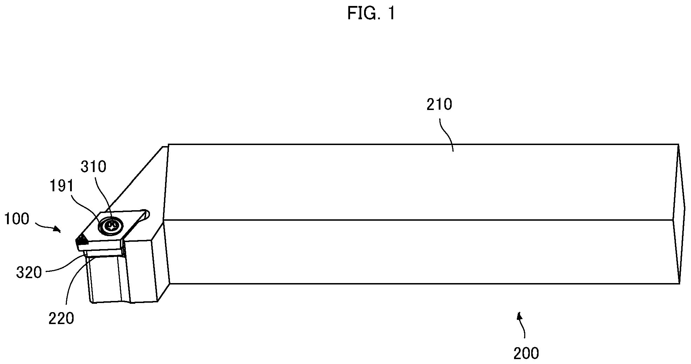

FIG. 1 is a general perspective view of a cutting tool 200 when a cutting insert 100 according to the present embodiment is installed. The cutting tool 200 according to the present embodiment is a cutting tool for a lathe. A main body 210 includes an installation seat 220 on which the cutting insert 100 is installed. In the present embodiment, a case where the cutting insert 100 is replaceably installed on the main body 210 and the cutting tool 200 functions in this state will be described, but the cutting insert 100 itself may be regarded as a cutting tool from a functional point of view since the cutting insert 100 cuts a work. The present invention is not limited to the replaceable cutting insert, and in a case where a cutting edge member, which is equivalent to the cutting insert 100, is fixed to the main body (described later), the cutting edge member and the main body as a whole can be regarded as a cutting tool.

The installation seat 220 is an installation surface of the cutting insert 100, and is disposed in the vicinity of the tip of the main body 210. A female screw hole is disposed in the installation seat 220, and when the cutting insert 100 is installed, the axis becomes approximately the same as the axis of an installation hole 191, which is disposed roughly at the center of the cutting insert 100. The cutting insert 100 is fixed to the installation seat 220 by an installation screw 310 which is engaged with the female screw hole via the installation hole 191. In the illustrated embodiment, a shim 320, having a predetermined thickness, is placed between the installation seat 220 and the cutting insert 100, in order to extend the life of the tool.

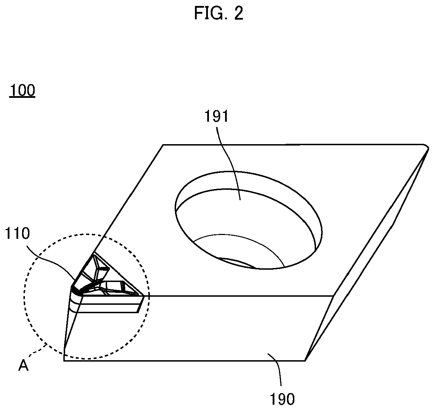

FIG. 2 is a general perspective view of the cutting insert 100. The cutting insert 100 has a column shape of which upper surface and the bottom surface are approximately rhombic. The cutting insert 100 is constituted of a base metal 190 and a cutting edge member 110. In the base metal 190, the installation hole 191, where the installation screw 310 is inserted, is formed approximately at the center. The base metal 190 is made of steel or cemented carbide. In the base metal 190, a step difference portion is formed at each one of the acute-angled corners of the upper surface, and the cutting edge member 110 is fixed to the step difference portion by brazing or the like.

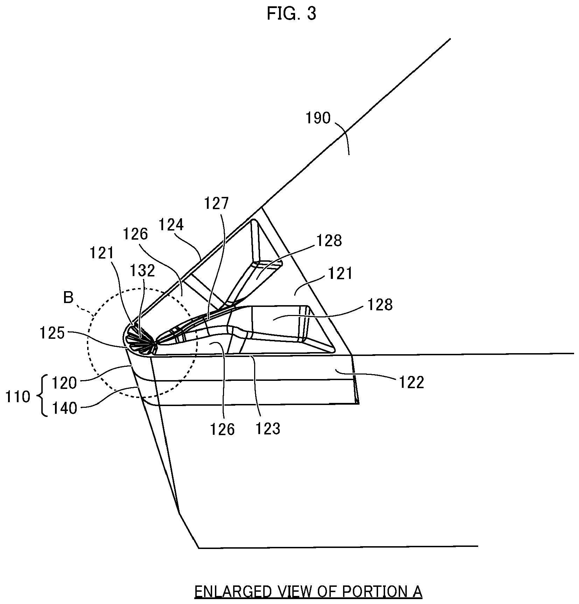

FIG. 3 is a partial enlarged view of the cutting insert 100, and specifically is an enlarged view of the portion A indicated in FIG. 2. As illustrated, the cutting edge member 110 of the present embodiment has a double structure of a sintered body 120 and a base 140. The sintered body 120 and the base 140 are approximately triangular prism-shaped having a same size respectively, and are vertically layered. The sintered body 120 contains at least 80% diamond by volume. Diamond excels in strength and abrasive resistance, and the duration of service of the cutting insert 100 can be extended by using diamond. In the present embodiment, it is assumed that the sintered body is a diamond sintered body formed by sintering diamond powder, but the same form may be created using a single crystal diamond formed by a vapor synthesis method. The base 140 is made of cemented carbide, for example. The cutting edge member 110 according to the present embodiment has a double structure of the sintered body 120 and the base 140, but the entire member may be formed as a diamond sintered body.

The sintered body 120 has a top face 121, which constitutes a part of the triangular prism-shaped upper surface, and a peripheral side face 122, which constitutes a side surface. The top face 121 is a polished flat surface, and has been adjusted such that the surface roughness thereof is within a range of at least 0.05 µm and less than 0.2 µm, for example. The top face 121 is formed on the triangular upper surface, at a part that is connected to the peripheral edge portion and a raised portion 127. The ridge lines where the top face 121 and the peripheral side face 122 cross includes a linear first ridge line 123 which is one side of the triangle, a linear second ridge line 124 which is another side of the triangle, and an arc-shaped corner R125 which connects the first ridge line 123 and the second ridge line 124. In the present embodiment, the corner R125 functions as a cutting edge. The cutting edge may be formed to continue to the first ridge line 123 and the second ridge line 124. A region of the top face 121 in the vicinity of the cutting edge functions as a land face.

In the upper surface of the sintered body 120, a portion other than the above mentioned top face 121 is depressed. This depressed portion is mainly formed by a first rake portion 132, a second rake portion 126 and a breaker wall face 128. The first rake portion 132 is inclined in a fan shape where the corner R125 side is arc-shaped. The specific configuration of the first rake portion 132 will be described in detail later.

The second rake portion 126 is formed to continue to the first rake portion 132, and is an inclined surface where the depth from the top face 121 increases in the direction from the first ridge line 123 and the second ridge line 124 toward the inner side of the triangle. The second rake portion 126, along with the first rake portion 132, functions as a rake surface. The breaker wall face 128 is formed as both side faces of the raised portion 127, which is formed to be raised from the second rake portion 126. The raised portion 127 passes through an intersection of an extension of the first ridge line 123 and an extension of the second ridge line, along the bisector that divides the angle formed into two. Therefore it may be regarded that the depressed portion of the upper surface of the sintered body 120 is constituted of: a first depressed portion surrounded by the second rake portion 126 on the first ridge line 123 side and the beaker wall face 128; and a second depressed portion surrounded by the second rake portion 126 on the second ridge line 124 side and the breaker wall face 128.

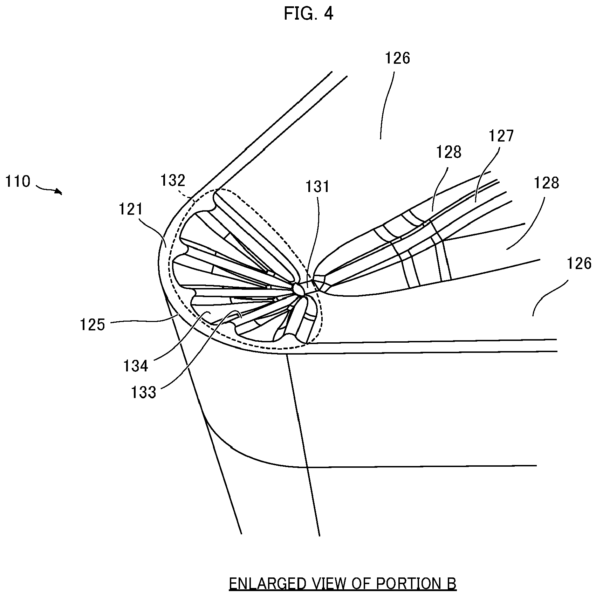

FIG. 4 is a partial enlarged view of a vicinity of the corner R125 of the cutting edge member 110 observed diagonally, and specifically is an enlarged view of the portion B in FIG. 3. As mentioned above, the first rake portion 132 is inclined in a fan shape where the corner R125 side is arc-shaped, and includes ridge portions 133 and groove portions 134, which are disposed alternately and are both depressed so as to be inclined from the top face 121 toward a pivot portion 131, which is a center of radial portions of the fan shape.

If compared to a wheel, the pivot portion 131 is a portion corresponding to a hub, and the ridge portions 133 are portions corresponding to the spokes. The ridge portions 133 are portions formed to be raised in protruded-shapes toward the upper surface direction (toward the top face 121), and the groove portions 134 are portions formed to be depressed in protruded-shapes toward the opposite direction of the upper surface. The first rake portion 132 according to the present embodiment has five ridge portions 133 and four groove portions 134 as illustrated. Each of the ridge portions 133 continues to the pivot portion 131, and each of the groove portions 134 is disposed between two adjacent ridge portions 133.

Each of the ridge lines of the ridge portions 133 and each of the valleys of the groove portions 134 have been adjusted to inclinations in a 10° to 30° range with respect to the top face 121. Therefore in general, the first rake portion 132 functions as a rake surface having a 10° to 30° rake angle. Further, the second rake portion 126 is formed as an inclined surface continuing to the first rake portion 132. Furthermore, a raised portion 127 is formed so as to be raised from the second rake portion 126. The height of the ridge line of the raised portion 127 is the height of the top face 121 or less, since the top face 121 is formed by polishing the upper surface of the sintered body 120.

The cutting edge member 110 having this shape (cutting insert 100) excels in control of chips discharged from the work. Specifically, a chip generated during machining by the cutting edge formed at the corner R125 is curled more tightly in the direction toward the pivot portion 131 while sliding along the ridge portions 133 and the groove portions 134. The chip tightly curled like this easily breaks in this state, but further slides on the second rake portion 126 and is constrained by the raised portion 127. The chip that is curled strikes against the peripheral side face 122 or the work and easily breaks. The curled chip is also easily broken by its own weight and the curling motion itself. In other words, the cutting insert 100 of the present embodiment can provide a force to constrain the chip and more efficiently break the constrained chip, even if there is no projected portion higher than the cutting edge.

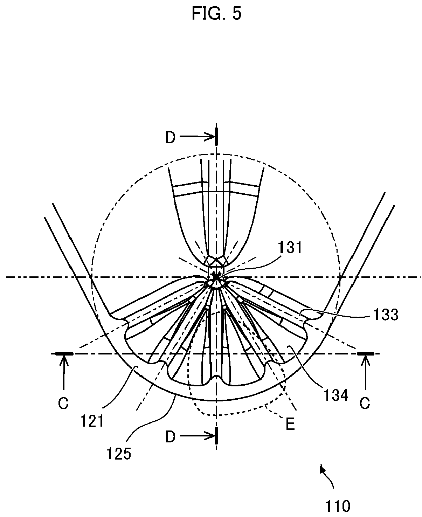

FIG. 5 is a partial enlarged view of the vicinity of the corner R125 of the cutting edge member 110 observed from the top. The pivot portion 131 located at the pivot of the fan-shaped first rake portion 132 is an intersection at which a center line of each ridge portion 133 intersects. In the present embodiment, the pivot portion 131 is set so as to match with the center of curvature of the corner R125 (center of the circle indicated by the two dot chain line in FIG. 5). It is confirmed that the breakability and dischargeability of chips improve if the pivot portion 131 is disposed so as to match with the center of curvature of the corner R125, or to be on the opposite side of the corner R125 with respect to the center of curvature (side that is distant from the corner R125).

In the present embodiment, five ridge portions 133 are disposed, but the number of ridge portions 133 may be determined in accordance with the radius of curvature of the corner R125. Specifically, it was confirmed that a desirable number of ridge portions L is an integer that satisfies 4r+1≤L≤10r+2, where r (mm) is the radius of curvature of the corner R. In the example illustrated in FIG. 5, the radius of curvature is 0.4 mm, but the desired radius of curvature r of the corner R is different depending on the material of the work and the purpose of the cutting, hence the number of ridge portions L may be determined in accordance with each situation. Specifically, it was confirmed that if the number of ridge portions L is an odd number, the center line that is lead to the apex of the corner R becomes the ridge portion, and breakability improves compared with the case where the center line is the groove portion. In other words, it is preferable that L which satisfies the above relational formula is an odd number.

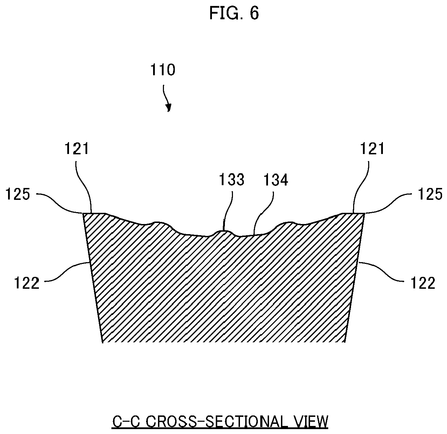

FIG. 6 is a C-C cross-sectional view of the cutting edge member 110 indicated in FIG. 5. As illustrated in FIG. 6, the ridge portions 133 and the groove portions 134 are disposed alternately, and are depressed with respect to the top face 121 located on both edges. In the present embodiment, an angle formed by the top face 121 and the peripheral side face 122 is an acute angle.

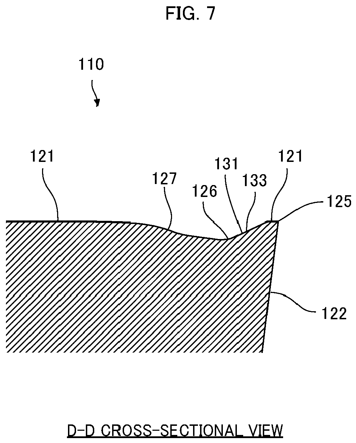

FIG. 7 is a D-D cross-sectional view of the cutting edge member 110 indicated in FIG. 5. D-D is a plane along the above mentioned bi-sector. As illustrated, the crossing line of the upper surface and the cross-section descends from the boundary between the top face 121 and the ridge portion 133 at the center, reaches the pivot portion 131, and is further depressed down on the second rake portion 126 to the deepest point, then rises as the raised portion 127 reaching the top face 121 on the opposite side of the corner R125.

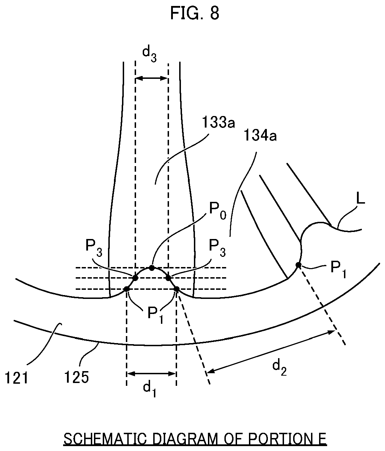

FIG. 8 is an enlarged schematic view of the corner R125, and specifically is an enlarged view of the portion E in FIG. 5. As mentioned above, the ridge portions 133 and the groove portions 134 are formed from the top face 121 to the pivot portion 131, and since the top face 121 is a polished flat surface, the crossing line L of the top face 121 with the ridge portions 133 and the groove portions 134 appears as a wave form.

The crossing line L becomes a curved line that protrudes in the opposite direction of the corner R125 in a portion corresponding to the ridge portion 133, and becomes a curved line that protrudes in the direction toward the corner R125 in a portion corresponding to the groove portion 134. A point connecting these two portions is regarded as an inflection point P₁. Out of the two adjacent inflection points Pi, the distance d₁ between the two inflection points P₁ sandwiching the curve of the ridge portion 133 (two inflection points P₁ sandwiching the curved line of the ridge portion 133a at the center in the example in FIG. 8) is regarded as the width of the ridge portion 133 at the boundary with the top face 121. Further, out of the two adjacent inflection points P₁, the distance d₂ between the two inflection points P₁ sandwiching the curve of the groove portion 134 (two inflection points P₁ sandwiching the curve of the groove portion 134a adjacent to the ridge portion 133a at the center in the example in FIG. 8) is regarded as the width of the groove portion 134 at the boundary with the top face 121. At this time, d₂>d₁ is preferable. In other words, at the boundary with the top face 121, it is preferable that the width of the groove portion 134 is wider than the width of the ridge portion 133. It was confirmed that if this relationship is satisfied, the chip can be smoothly guided to the first rake portion 132. The definition of width is not limited to this, and may be any definition as long as the portion of the curve that protrudes in the opposite direction of the corner R125 in the portion corresponding to the ridge portion 133 and the portion of the curve that protrudes in the direction toward the corner R125 in the portion corresponding to the groove portion 134 can be distinguished from each other. For example, a linear portion may exist between these curves if these curves can be distinguished from each other.

The ridge portion 133 is disposed such that the width is constant from the arc of the corner R125 to the pivot portion 131. Specifically, a line that is equidistant from two lines (a line connecting two inflection points P₁ sandwiching the curve of the ridge portion 133 on the crossing line L; and a line that is parallel with this line and passes through the apex P₀ of the curve of the ridge portion 133) is assumed, and the two points at which this line crosses with the crossing line L are assumed to be mid-points P₃ respectively. A width d₃, when the ridge portion 133 is sectioned by a plane, which passes through the two mid-points P₃ and is parallel with the rake angle of the rake surface, is determined as the width of the ridge portion 133. This width d₃ is constant all the way to the pivot portion 131. For example, this width d3 is preferably 0.01 mm or more and 0.3 mm or less. If the width of the ridge portion 133 is constant, the width of the groove portion 134 gradually decreases in the direction from the arc of the corner R125 to the pivot portion 131. It was confirmed that if this relationship between the width of the ridge portion 133 and the width of the groove portion 134 is satisfied, chips are smoothly curled tightly toward the pivot portion 131. In the above description, it was defined that the width of the ridge portion 133 is constant using the width d₃, but the definition of the width is not limited to this. It was confirmed that a similar effect can be acquired when the ridge portion 133 extends toward the pivot portion 131 while the protruding curved line of the ridge portion 133 is maintained to be the same radius of the curvature of the apex portion, even if the width slightly changes. The radius of curvature of the apex portion is preferably 0.01 mm or more and 0.1 mm or less in the plan view.

A cutting insert 100' according to another embodiment will be described next. A difference of the cutting insert 100' from the cutting insert 100 is a configuration of the rake portion. The configurations and functions of the other composing elements are the same as the configurations and functions of the corresponding composing elements of the cutting insert 100, hence description thereof is omitted, and only configurations and functions that are different from the cutting insert 100 will be described.

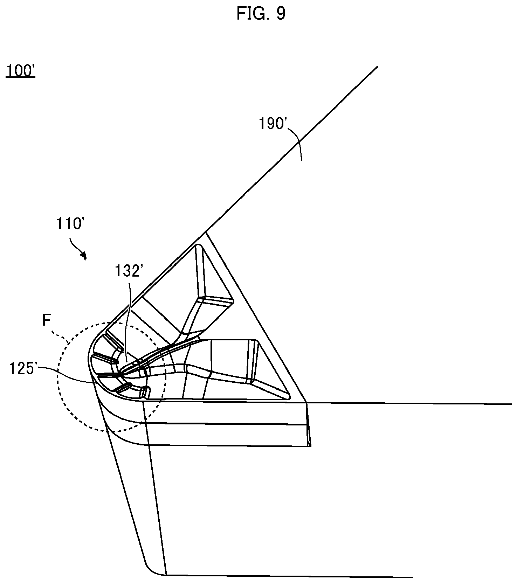

FIG. 9 is a partial enlarged view of the cutting insert 100' according to another embodiment. A radius of curvature of a corner R125' of a cutting edge member 110' of the cutting insert 100' here is assumed to be 0.8 mm, which is larger than the radius of curvature of the corner R125 of the cutting edge member 110 of the cutting insert 100. A corner of a base 190' is also curved so as to match with the radius of curvature of the corner R125'.

A first rake portion 132' is still the same as the first rake portion 132 of the cutting insert 100 in terms of inclining in a fan shape with the corner R125' side arc-shaped, but the size of the fan shape is larger as the size of the corner R125' is larger.

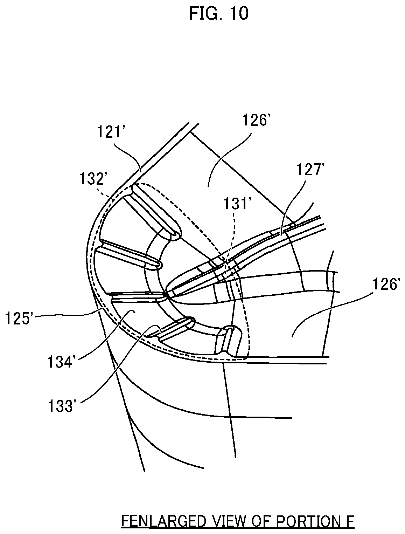

FIG. 10 is a partial enlarged view of a vicinity of the corner R125' of the cutting edge member 110' observed diagonally, and specifically is an enlarged view of the portion F in FIG. 9. A first rake portion 132' includes ridge portions 133' and groove portions 134', which are disposed alternately and are both depressed so as to be inclined from the top face 121 toward a pivot portion 131' which is a center of radial portions of the fan shape. In the cutting edge member 110', a raised portion 127' extends toward the corner R125', and the pivot portion 131' is covered with a raised portion 127'. Therefore each of the ridge portions 133' and groove portions 134' does not reach the pivot portion 131' but have a length about half of the length between the top face 121' and the pivot portion 131'.

In the case of the cutting insert 100' using the cutting edge member 110' configured like this, the chips curled tightly by the first rake portion 132 can more quickly strike against the raised portion 127', and are guided to the second rake portions 126 on the left and right sides of the peripheral side face 122 or to the work. Depending on the material of the work, the purpose of cutting, or the like of the work, this kind of cutting processing may be preferable, and the cutting insert 100' is suitable for such a case.

In the embodiments described above, the cutting inserts 100 and 100' are rhombic column-shaped, but the general shape thereof is not limited to this. Further, the method of installing the cutting insert on the main body 210 is not limited to using the installation screw 310 either. A number of cutting edge members fixed to the cutting insert is not limited to one, but may be two or more. If one cutting insert has a plurality of cutting edge members, one cutting insert can be used for a long period of time by changing the direction of the main body 210 where each cutting edge member is installed.

## Claims

1. A cutting tool comprising:
a peripheral side face;
a top face, which is a flat top face constituting a part of an upper surface that is depressed except for the portion of the top face;
a cutting edge that is formed at least on a ridge line of a corner R connecting two linear ridge lines, out of ridge lines where the peripheral side face and the top face cross; and
a fan-shaped rake portion including ridge portions and groove portions, which are disposed alternately and are both depressed so as to be inclined from the corner R side, where the crossing line with the top face appears in a wave form, toward a pivot portion which is a center of radial portions.

2. The cutting tool according to claim 1, where the width of the groove portion is wider than the width of the ridge portion at a boundary with the top face.

3. The cutting tool according to claim 1 or 2, wherein
the ridge portion is disposed so that the width is constant from the boundary with the top face, which appears as the crossing line, to the pivot portion, and the groove portion is disposed so that the width gradually decreases from the boundary with the top face, which appears as a crossing line, to the pivot portion.

4. The cutting tool according to any one of claims 1 to 3, wherein
the number L of ridges is an integer that satisfies 4r+1≤L≤10r+2, where r (mm) denotes a radius of curvature of the corner R.

5. The cutting tool according to claim 4, wherein the number L is an odd number.

6. The cutting tool according to any one of claims 1 to 5, wherein
the pivotal portion is disposed so as to match the center of curvature of the corner R, or is disposed on the opposite side of the corner R with respect to the center of curvature.

7. The cutting tool according to any one of claims 1 to 6, further comprising:
an inclined surface disposed to continue to the rake portion; and
a raised portion which extends along a bi-sector of the two linear ridge lines, and is raised from the inclined surface.

8. The cutting tool according to any one of claims 1 to 7, wherein the rake portion is formed by a sintered body which contains at least 80% diamond by volume.
